# EUROPÄISCHE PATENTSCHRIFT

(11) **EP 1 998 930 B1**
(45) Veröffentlichungstag und Bekanntmachung des Hinweises auf die Patenterteilung: **12.05.2010**
(21) Anmeldenummer: 07711799.2
(22) Anmeldetag: 06.03.2007
(51) Int. Cl.: B23Q 1/54, B25J 17/02

(54) **POSITIONIEREINRICHTUNG**
POSITIONING DEVICE
DISPOSITIF DE POSITIONNEMENT

(30) Priorität: 13.03.2006 DE 102006011823
(43) Veröffentlichungstag der Anmeldung: 10.12.2008
(73) Patentinhaber: ABB AG, 68309 Mannheim (DE)
(72) Erfinder: KOCK, Sönke, S-724 63 Västeras (SE); SOETEBIER, Sven, 68526 Ladenburg (DE); WALDI, Wolfgang, 69226 Nussloch-Maisbach (DE)
(74) Vertreter: Partner, Lothar
(86) Internationale Anmeldenummer: PCT/EP2007/001890
(87) Internationale Veröffentlichungsnummer: WO 2007/104446

(56) Entgegenhaltungen:
- WO-A-01/85402
- US-A- 5 656 905
- US-A- 6 041 500
- US-B1- 6 425 177

## Beschreibung

Die Erfindung betrifft eine Positioniereinrichtung mit einer Stützstruktur, mit einem Werkstückträger und mit längenverstellbaren Streben, die jeweils einerseits mit der Stützstruktur und andererseits mit dem Werkstückträger verbunden sind, wobei die Streben an den Verbindungsstellen mit der Stützstruktur und dem Werkstückträger beweglich gelagert sind, wobei wenigstens ein Teil der Streben längenverstellbar ist und wobei wenigstens ein Teil der Streben einen Antrieb zur Längenverstellung aufweist.

Aus dem Stand der Technik sind unterschiedliche Positioniereinrichtungen der gattungsgemäßen Art bekannt geworden wie z.B. im Dokument US-A-6,041,500, die in verschiedenen Bereichen der Technik zum Einsatz kommen. Die bekannten Positioniereinrichtungen dienen dazu, ein Objekt in Position zu halten. Derartige Positioniereinrichtungen werden daher beispielsweise eingesetzt, um ein Werkstück gegenüber einem Werkzeug so zu positionieren, dass das Werkstück mit Hilfe des Werkzeug bearbeitet werden kann. In der Automobilindustrie wird beispielsweise ein Karosserieteil eines Fahrzeuges mit Hilfe von üblicherweise mehreren Positioniereinrichtungen in einer Arbeitsstation oder ähnlichem positioniert. Die so positionierte Karosserie kann dann von zum Beispiel Schweißrobotern bearbeitet werden.

So beschreibt die US 5,787,758 eine dreiachsige Positioniereinrichtung, die der Positionierung von Objekten, wie beispielsweise Werkstücke, Werkzeug, Sensoren, optische Oberflächen und so weiter dient. Die bekannte Positioniereinrichtung weist eine Stützstruktur auf, die Stellglieder mit einer verstellbaren Maschinenkomponente verbunden ist. Die Maschinenkomponente nimmt das Objekt auf und kann durch das Ansteuern der Stellglieder relativ zu der Stützstruktur bewegt und positioniert werden. Allerdings soll die Maschinenkomponente lediglich in Richtung der Achsen eines karthesischen Koordinatensystems der Maschinenkomponente bewegt werden können, dessen Ursprung fest mit der Maschinenkomponente verbunden ist. Ein Kippen, Verschwenken oder Drehen der Maschinenkomponente um diese Achsen soll unterbunden sein. Für diesen Zweck weist die bekannte Positioniereinrichtung drei Streben auf, die einerseits an der Stützstruktur und andererseits an der Maschinenkomponente angelenkt sind. Die Streben sind dabei derart mit den genannten Teilen verbunden und ausgebildet, dass diese ein Verschwenken der Maschinenkomponente um diese Achsen verhindern. Die Streben weisen zwei Strebenabschnitte auf, die klappbar miteinander verbunden sind, so dass die Länge der Strebe durch auf- und zuklappen verstellt beziehungsweise verändert werden kann.

Solche Positioniereinrichtungen haben insbesondere den Nachteil, dass diese einen großen Platz- und Raumbedarf haben. Dies führt insbesondere bei der Anordnung der Positioniereinrichtung in einer Fertigungsstrasse oder ähnlichem zu Problemen da hier regelmäßig wenig Raum zwischen den Robotern, Förderbändern, Bauteilen und so weiter zur Verfügung steht. Desweiteren verfügen die bekannten Positioniereinrichtungen nicht über die notwendige Steifigkeit, um den zeitweise sehr hohen Belastungen begegnen zu können. Darüber hinaus gestaltet sich der Zusammenbau der bekannten Positioniereinrichtungen als aufwendig.

Aufgabe der Erfindung ist es, eine Positioniereinrichtung anzugeben, die kompakt und platzsparend aufgebaut ist sowie eine hohe Steifigkeit aufweist.

Diese Aufgabe wird durch eine Positioniereinrichtung mit einer Stützstruktur, mit einem Werkstückträger und mit längenverstellbaren Streben mit den in dem Patentanspruch 1 angegebenen Merkmalen gelöst.

Auf diese Weise ist erfindungsgemäß sichergestellt, dass zwar jede Strebe einzeln Kräfte aufnimmt, jedes Strebenpaar jedoch als Kräftepaar betrachtet auch ein Moment aufnehmen kann. Hierdurch ist die mittlere Belastung der Streben reduziert. Zudem weist die parallele Anordnung der Streben zu Strebenpaaren unter speziellen Ausgestaltungen des Schwenklagers am einen Ende der Längserstreckung der Streben eine vorteilhafte Steifigkeit der Gesamtkonstruktion auf. Ein weiterer Vorteil einer derartigen Anordnung von Streben ist darin zu sehen, dass die Positioniereinrichtung vergleichsweise kompakt ausgestaltet ist in Bezug auf die Kräfte und Momente, die sie ertragen kann.

Bei einer vorteilhaften Ausgestaltung des Anmeldungsgegenstandes ist die Strebenzahl genau sechs.

Damit hat die Positionseinrichtung genau drei längenveränderliche Strebenpaare, die bei entsprechender räumlicher Anordnung auf der Stützstruktur auf besonders günstige Weise die Kräfte und Momente eines Werkstückes in die Stützstruktur weitergeben.

Erfindungsgemäß ist es auch vorgesehen, dass jedes Strebenpaar einen gemeinsamen Antrieb hat.

Auf diese Weise wird die Positioniereinrichtung insgesamt noch kompakter und der Steuerungsaufwand zum Ansteuern der Antriebe ist entsprechend geringer.

Vorteilhaft ist es zudem, wenn der Antrieb mit einer winkeltreuen Verbindung mit dem jeweiligen Strebenpaar verbunden ist, insbesondere einem Riemen, einem Zahnriemen, einem Getriebe oder Zahnrädern.

Weitere vorteilhafte Ausgestaltungen der erfindungsgemäßen Positioniereinrichtung sind den weiteren abhängigen Ansprüchen zu entnehmen.

Anhand der in den Zeichnungen dargestellten Ausführungsbeispielen sollen die Erfindung, vorteilhafte Ausgestaltungen und Verbesserungen der Erfindung sowie deren besonderen Vorteile näher erläutert und beschrieben werden.

Es zeigen:
- Fig. 1: ein erstes Basis-Schema eines längenveränderlichen Stützenpaares,
- Fig. 2: ein erstes Schema zur Kopplung eines Stützenpaares,
- Fig. 3: eine dreidimensionale Ansicht auf eine erste Ausführungsform einer Positioniereinrichtung,
- Fig. 4: eine Draufsicht auf die Ausführungsform der Positioniereinrichtung,
- Fig. 5: eine Detaildarstellung eines Strebenpaarfußes der Positioniereinrichtung,
- Fig. 6: eine zweite Detaildarstellung des Strebenpaarfußes, teilweise als Schnittbild ausgeführt
- Fig. 7: eine Prinzipskizze eines Zahnriemenantriebes für ein Stützenpaar,
- Fig. 8: eine Detailansicht auf die Strebenköpfe des Strebenpaares,
- Fig. 9: eine erste Beispielposition,
- Fig. 10: eine zweite Beispielposition,
- Fig. 11: eine dritte Beispielposition sowie
- Fig. 12: eine vierte Beispielposition der Positioniereinrichtung,
- Fig. 13: ein zweites Schema zur Kopplung eines Stützenpaares,
- Fig. 14: ein drittes Schema zur Kopplung eines Stützenpaares,
- Fig. 15: ein zweites Beispiel eines gemeinsamen Antriebs für ein Strebenpaar,
- Fig. 16: eine Detailansicht auf das zweite Beispiel im Strebenpaar,
- Fig. 17: ein erstes Anordnungsbeispiel,
- Fig. 18: ein zweites Anordnungsbeispiel eines Strebenpaares mit separaten Bremsen, sowie
- Fig. 19: ein drittes Anordnungsbeispiel.

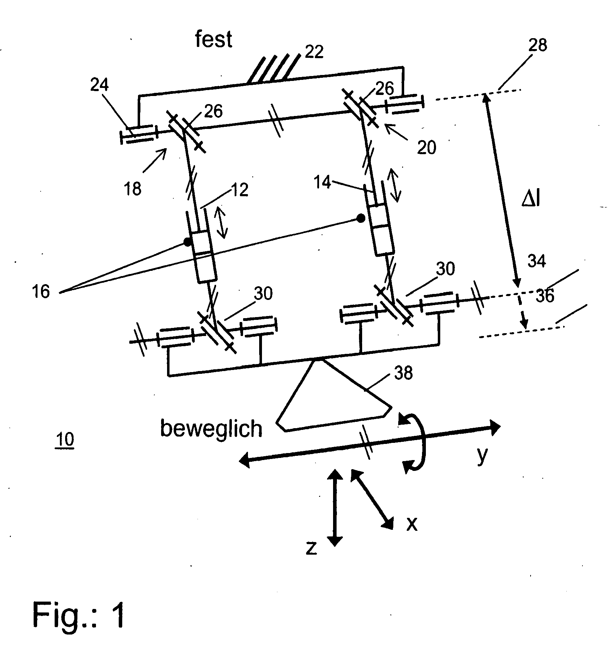

Fig. 1 zeigt ein Basis-Schema 10 eines erfindungsgemäßen Stützenpaares einer Positioniereinrichtung, bei der eine erste Strebe 12 sowie eine zweite Strebe 14 parallel und mit durch die Konstruktion vorgegebenem Abstand zueinander angeordnet sind. Beide Streben 12, 14 sind in ihrer Länge verstellbar, was im ersten Schema 10 durch eine Kolbenzylinderanordnung 16 dargestellt ist. Dabei sind hier unterschiedliche Antriebsarten denkbar, so zum Beispiel hydraulisch, pneumatisch oder elektrisch, aber auch eine mechanische Längenverstellung, die dann wiederum durch einen pneumatischen, hydraulischen oder elektrischen Antrieb bewegt wird. Ebenso ist zusätzlich eine manuelle Verstellung denkbar, zum Beispiel mit Hilfe einer Kurbel einzusetzen im Falle eines Antriebsausfalles.

Die Streben 12, 14 sind an einem ersten Ende ihrer Längserstreckung, in der Fig. 1 oben dargestellt, mit einem ersten 18 sowie einem zweiten Kardangelenk 20 mit einer Stützstruktur 22 fest verbunden. Dabei weist jedes Kardangelenk 18, 20 jeweils ein erstes 24 sowie ein zweites Schwenklager 26 auf. Die jeweils ersten Schwenklager 24 sind dabei mit der Stützstruktur 22 fest verbunden und weisen einen konstruktionsbedingten festen Abstand zueinander auf. Zudem sind die ersten Schwenklager 24 so angeordnet, dass sie eine gemeinsame erste Schwenkachse 28 haben. An dem zweiten Ende ihrer Längserstreckung weisen die Streben 12, 14 jeweils ein drittes Schwenklager 30 auf, wobei diese dritten Schwenklager 30 gemeinsam auf einem vierten Schwenklager 32 gelagert sind. Auf diese Weise ist erfindungsgemäß sichergestellt, dass auch die dritten Schwenklager 30 einen durch die Konstruktion vorgegebenen Abstand zueinander aufweisen und zudem auf einer zweiten Schwenkachse 34 gemeinsam verschwenken. Die zweite Schwenkachse 34 ist um einen vorgegebenen Betrag von der Schwenkachse 28 beabstandet wodurch die erforderliche Länge der Strebenpaare festgelegt wird. Das gemeinsame Schwenklager 32 mit Schwenkachse 34 ist wiederum fest mit einer als Werkstückträger nutzbaren, bewegten Plattform 38 verbunden. Derart verbunden erhält die Plattform 38 gegenüber einer festen Stützstruktur 22 die mit den Pfeilen in Fig. 1 symbolisierte Beweglichkeit. Dabei ändert sich je nach Position und Orientierung der Plattform der Abstand der Schwenkachse 28 und 34, beispielsweise kann sich Achse 34 auf die Position von Achse 36 verlängern.

Mit dem vorstehend näher beschriebenen Lagerschema für die untere Lagerung der Streben 12, 14 werden die Freiheitsgrade für die Lagerung insgesamt erzielt, die durch die Pfeilrichtungen mit den Bezeichnungen X, Y sowie Z in der Figur gezeigt sind.

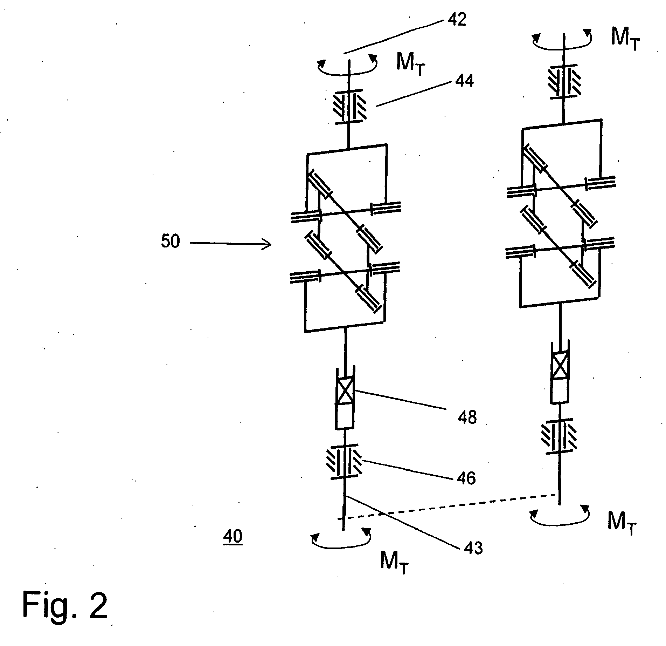

Für einen gemeinsamen und längensynchronen mechanischen Antrieb der Strebenpaare sind erfindungsgemäß drei Ausführungen möglich Fig. 2 zeigt ein erstes Schema 40 zur kinematischen Kopplung des Strebenpaares, die mit Hilfe einer Gelenkanordnung, die Antriebsleistung eines Motors auf ein Strebenpaar in bestimmter Weise überträgt. Bei einer erfindungsgemäßen Positioniereinrichtung kann durch dese Gelenkanordnung die Antriebsleistung des Motors unabhängig von der Position und Orientierung des verschwenkten Strebenpaares übertragen werden, ohne dass es zu einem Verspannen oder Verklemmen kommt. Jeweils eine der beiden Wellen 42 und 43 kann als antriebs- oder abtriebsseitig eingesetzt werden. Wird beispielsweise Welle 42 als abtriebsseitige Welle eingesetzt so ist diese parallel zur jeweiligen Strebenachse 12 oder 14 aus der Fig. 1 anzuordnen. Die antriebsseitige Welle 43 wird durch die beschriebene Gelenkanordnung von der Position und Orientierung einer Strebe entkoppelt und kann mit seinem Drehlager 46 entweder einer Stützstruktur 22 oder dem Achskörper des Schwenklagers 24 zugeordnet werden. Erfindungsgemäß werden zwei Gelenkanordnungen 40 benötigt, um ein Strebenpaar anzutreiben. Dadurch wird es möglich, dass zur Strebenverstellung erforderliche Antriebsleistung von einem Antrieb auf beide Streben zu verteilen. Dabei spielt es keine Rolle, an welchem Ende der Streben die jeweiligen Lager angeordnet sind. In Fig. 1 könnten die Gelenkkombinationen 30, 32 und die Einzelgelenke der Kardangelenke 18, 20 ausgetauscht bzw. gegeneinander ersetzt werden. So könnten beide Gelenke 30, 32 auch am oberen Ende der Streben 12, 14 angeordnet sein, während die Kardangelenke 18, 20 am unteren Ende dann angeordnet sein könnten. Entsprechend kann die Gelenkanordnung 40 entweder den pfattformseitigen Gelenken oder den Gelenken der Stützstruktur zugeordnet werden um die Antriebsleistung auf das Strebenpaar zu übertragen. Zwischen einem ersten 44 und einem zweiten Drehlager 46 ist auf der ersten Drehachse 42 ein verdrehsteifes Längenausgleichselement 48 sowie ein drittes Kardangelenk 50 angeordnet. Auf diese Weise ist mit besonders günstigen technischen Mitteln die Funktion eines gemeinsamen und längensynchronen mechanischen Antriebs der Strebenpaare mit Standardelementen der Technik realisiert. Es ist denkbar, dass die Lagerkräfte der zwei Drehlager 44 oder 46 in einem gemeinsamen Gehäuse aufgenommen werden.

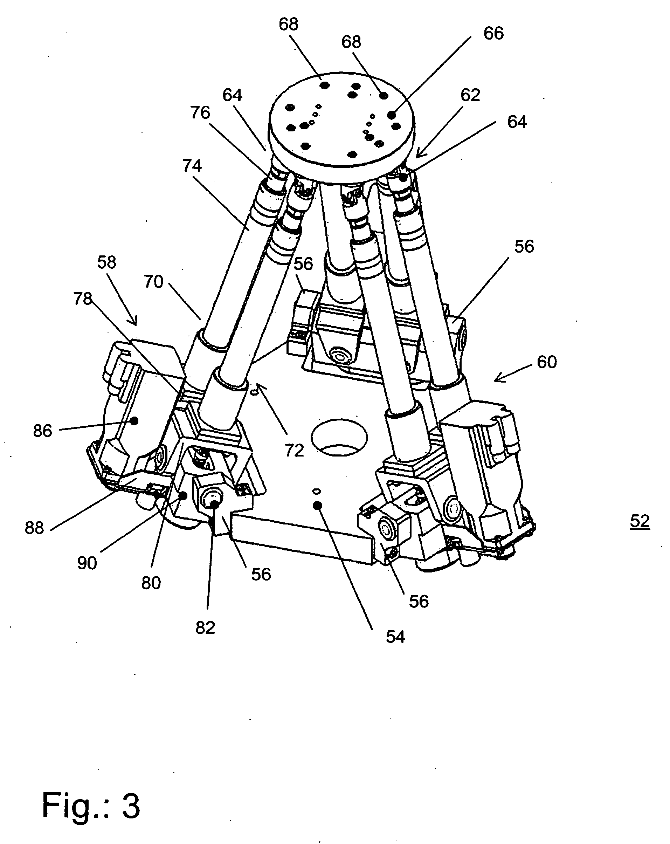

Fig. 3 zeigt eine erste Positioniervorrichtung 52 als dreidimensionale Ansicht. Eine Basisplatte 54 ist mit ersten Verbindungselementen 56 mit einem ersten 58, einem zweiten 60 sowie einem dritten Strebenpaar 62 verbunden. Die Basisplatte 54 ist in etwa wabenförmig ausgebildet, wobei ein erstes Ende der Strebenpaare 58, 60, 62, nämlich das untere Ende, an jeder zweiten Seite der Basisplatte 54 angeordnet ist. Auf diese Weise ist eine liniensymmetrische Ausgangsposition für die Strebenpaare 58, 60, 62 erreicht, die sich besonders günstig auf die durch die Positioniervorrichtung 52 aufzunehmenden Kräfte und deren Weiterleitung auswirkt.

Jede Strebe eines der Strebenpaare 58, 60, 62 ist an ihrem oberen Ende mittels jeweils einem Universalgelenk 64 mit einer Werkzeugplatte 66 verbunden. Die Universalgelenke 64 sind Kardangelenke und die Werkzeugplatte 66 im vorliegenden Beispiel als Scheibe ausgestaltet. Bei der Beabstandung der Universalgelenke 64 jeder Strebe eines Strebenpaares 58, 60, 62, ist darauf geachtet worden, dass die Streben parallel zueinander liegen können. Zudem ist der Durchmesser der Werkzeugplatte 66 kleiner gewählt, als der äußere Durchmesser der Basisplatte 54, so dass die Strebenpaare jeweils einen bestimmten Winkel zu einer gedachten Senkrechten auf der Basisplatte 54 haben, jedenfalls in einer Ausgangslage, bei der die Strebenpaare eine gleiche Länge aufweisen. Diese Ausgangslage kann sich entsprechend der Längenverstellungsmöglichkeit der einzelnen Streben jedoch entsprechend verändern.

Die Werkzeugplatte 66 weist eine Anzahl von Ausnehmungen 68 auf, beispielsweise Bohrungen, Durchgangslöcher oder Gewindelöcher, die eine Montage von verschiedenen Werkzeugen auf diese Werkzeugplatte 66 ermöglichen. In einfachen Fällen ist ein solches Werkzeug ein Stift, ein Fixiergreifer oder ein anderes Verbindungselement mit dem Werkstück.

Anhand vom ersten Strebenpaar 58 sollen verschiedene Bauteile näher erläutert werden, die jedes der Strebenpaare 58, 60, 62 aufweist. Dabei weist das erste Strebenpaar 58 eine erste 70 sowie eine zweite Strebe 72 auf, die im wesentlichen aus einem ersten 74 und einem zweiten zylindrischen Bauelement 76 besteht. Das zweite zylindrische Bauelement 76 ist dabei im ersten 74 so geführt, dass eine teleskopartige Verlängerung der Bauelemente 74, 76 ermöglicht ist, wobei bevorzugterweise die zylindrischen Bauelemente 74, 76 gegeneinander einen Drehfreiheitsgrad entlang der gemeinsamen Symmetrieachse aufweisen, weshalb erfindungsgemäß auf die Streben nur Zug- und Druckkräfte, aber keine Momente ausgeübt werden können und eine Verspannung der Positioniereinrichtung vermieden wird. Üblicherweise erfolgt die Verlängerung der Bauelemente über einen eingebauten Spindel- oder Gewindetrieb.

Durch jeweils ein Universalgelenk 64 an jede der Streben 70, 72 ist sichergestellt, dass der vorgegebene Abstand zwischen den Streben am Verbindungspunkt zur Werkzeugplatte 66 nicht veränderbar ist. Das Universalgelenk 64 weist eine kardanische Lagerung auf, das heißt die Streben 70, 72 sind prinzipiell mit einer Lagerung versehen, die zwei Freiheitsgrade aufweist. Am unteren Ende der ersten Strebe 70 ist ein fünftes Schwenklager 78 und entsprechend am unteren Ende der zweiten Strebe 72 ein sechstes Schwenklager 80 angeordnet. Der Abstand der des fünften 78 zum sechstens Schwenklager 80 auf die Lagerachsenmitten bezogen entspricht dem Abstand der oberen Universalgelenke 64 zueinander. Auf diese Weise ist erreicht, dass die Streben 68, 70 jedenfalls parallel zueinander angeordnet sind, solange sie eine gleiche Länge aufweisen. Dies ist eine Problematik, die eine synchrone Verlängerung oder Verkürzung der Streben 68, 70 betrifft, das später näher erläutert werden soll.

Das fünfte 78 sowie das sechste Schwenklager 80 sind mit ihren Lagerachsen so gelagert, dass sie nur senkrecht zu einer weiteren Lagerachse 82 eines siebten Schwenklagers 84 verschwenkbar sind. Dabei ist die siebte Schwenkachse 84 tangential zu einem gedachten Kreis um eine virtuelle Senkrechte zur Basisplatte 54 gelegen und zwar in deren Mittelpunkt.

Für einen gemeinsamen und längensynchronen Antrieb ihrer Längenverstellung weist das erste Strebenpaar 58 einen gemeinsamen Elektroantrieb 86 auf, der im unteren Bereich der Streben 70, 72 mit einem Verbindungselement 88 mit einem Tragteil 90 verbunden ist. Das Tragteil 90 ist derart auf der Lagerachse 82 verbunden, dass es bei Drehung der Achse mit verschwenkt und auf diese Weise sowohl das Verbindungselement 88 als auch den Elektromotor 86 im Falle einer Schwenkbewegung mit verschwenkt. Auf diese Weise ist sichergestellt, dass sich die relative Position des Elektromotors 68 zu den Strebenfüßen des ersten Strebenpaares 58 nicht verändert. Die Einzelheiten einer möglichen Kraftübertragung beziehungsweise Momentenübertragung vom Elektromotor 68 zum ersten Strebenpaar 58 wird später näher erläutert, da sich hier prinzipiell mehrere Möglichkeiten ergeben.

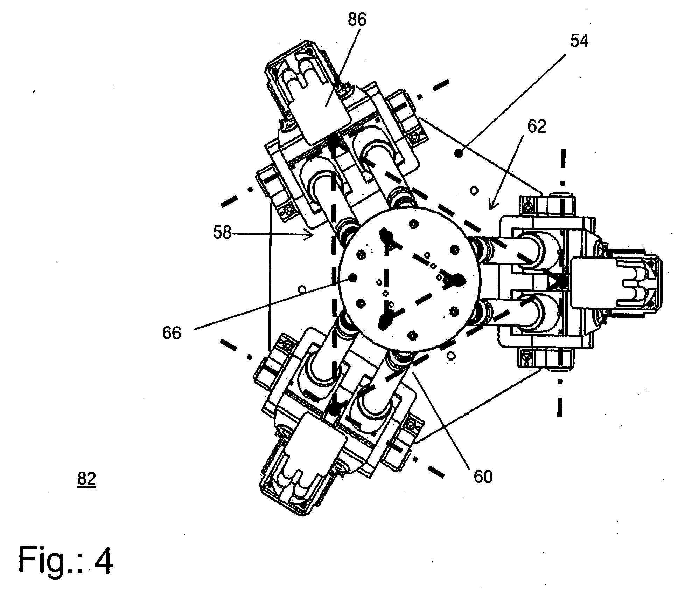

Fig. 4 zeigt die erste Positioniervorrichtung 52 in einer Draufsicht von oben auf die Werkzeugplatte 66, wobei die Strebenpaare 58, 60, 62 eine gleiche Länge aufweisen, so dass die Werkzeugplatte 66 in dieser Ansicht genau mittig oberhalb der Basisplatte 54 angeordnet ist. In dieser Figur sind die Bezugszeichen für gleiche Teile, wie sie auch in Fig. 3 zu sehen sind, entsprechend verwendet. Aus dieser Figur ist durch Einzeichnen der Schwenklagerachsen, nämlich der Lagerachse 82 und den entsprechenden Schwenklagerachsen der weiteren Strebenpaare 60, 62 entnehmbar, dass eine symmetrische Anordnung der Strebenpaare 58, 60, 62 in einem gleichseitigen Dreieck gewählt wurde, die zumindest in dieser Ausgangslage der Werkzeugsplatte 66 eine günstige, gleichmäßige sowie symmetrische Verteilung der Kräfte und Momente, die auf die Werkzeugplatte 66 wirken könnten, auf die einzelnen Strebenpaare 58, 60, 62 bewirkt. Auf diese Weise ist eine günstige gleiche Auslegung jeder der einzelnen Bauteile möglich, sowie die Möglichkeit gegeben, durch die gleichartige Ausgestaltung der Strebenpaare 58, 60, 62 sowie deren Lagerungen und Antrieb jeweils nur ein Antriebs- bzw. Strebenpaarart zu konstruieren und zu produzieren, die dann die entsprechende Positioniervorrichtung ergibt.

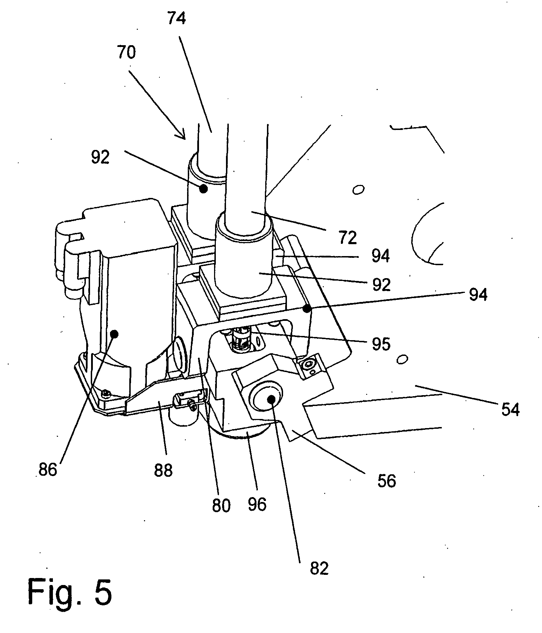

Fig. 5 zeigt eine Detailvergrößerung des Fußes des ersten Strebenpaares 58, wobei der Elektromotor 68, das Verbindungselement 88, das sechste Schwenklager 80, die Lagerachse 82 sowie das erste Verbindungselement 56 vergrößert dargestellt sind. In der Figur sind deutlich untere Verbindungselemente 92 gezeigt, die das erste zylindrische Bauteil 74 der ersten Strebe 70 fest mit einer ersten Schwenkgabel 94 des fünften Schwenklagers 74 verbindet. Mit einer entsprechenden Schwenkgabel 94 ist auch das sechste Schwenklager 80 der zweiten Strebe 72 verbunden.

In dieser Figur ist zudem vergrößert dargestellt, dass eine mechanische Verbindung zwischen einer unteren Baugruppe 96 und dem zweiten zylindrischen Bauteil 76 beziehungsweise dem entsprechenden Bauteil der zweiten Strebe 72 besteht.

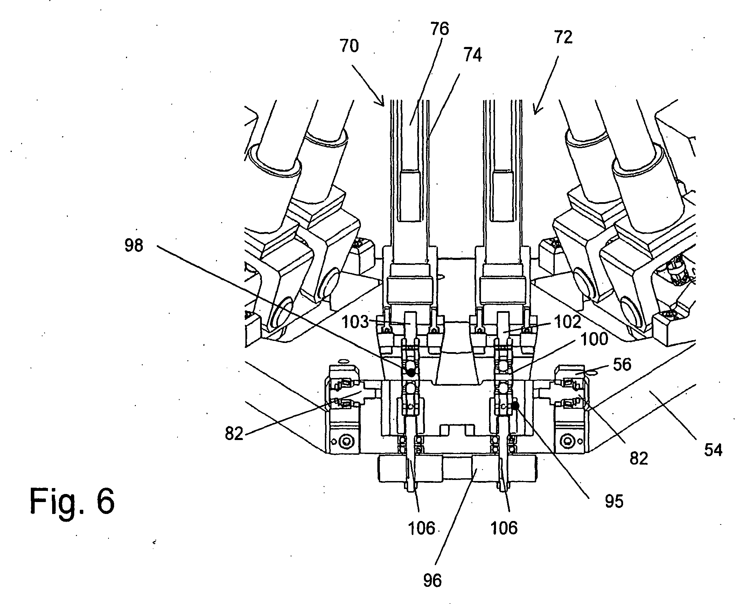

Fig. 6 zeigt in einem Querschnitt durch die Lagerachse 82 eine erste Ausgestaltung der mechanischen Verbindung 95 in Form eines vierten 98 und eines fünften Kardangelenkes 100 entsprechend dem ersten Schema in Fig. 2. Die Kardangelenke 98, 100 sind einerseits mit Stäben 102 verbunden, die eine Drehbewegung des zweiten zylindrischen Bauteils 76 unter dem entsprechenden Bauteil der zweiten Strebe 62 bewirken. Andererseits sind die Kardangelenke 98, 100 verbunden mit Kupplungselementen 104, die wiederum mit Antriebswellen 106 verbunden sind. In der nicht näher dargestellten unteren Baugruppe 96 wird sichergestellt, dass der Antrieb 86 beide Antriebswellen 106 mit einer gleichen Geschwindigkeit antreibt, so dass sichergestellt ist, dass sich die Strebenpaare in ihrer Längserstreckung gleichmäßig verlängern oder verkürzen. In der dargestellten Ausführungsform des ersten Strebenpaares 58, soll dies durch den gemeinsamen Antrieb durch ein gemeinsames Zahnrad erfolgen, dass in dieser Figur jedoch nicht in die die Bildebene fällt und somit nicht dargestellt ist. Bei dieser Art des Antriebs ist darauf zu achten, dass die eine der zweiten Bauelemente 76 durch eine Linksdrehung gestreckt wird während die andere durch eine Rechtsdrehung angetrieben und damit durch eine Rechtsdrehung verlängert wird (oder umgekehrt). Bei einer Verkürzung wirkt der Antrieb mit einem entsprechend vertauschten Drehsinn.

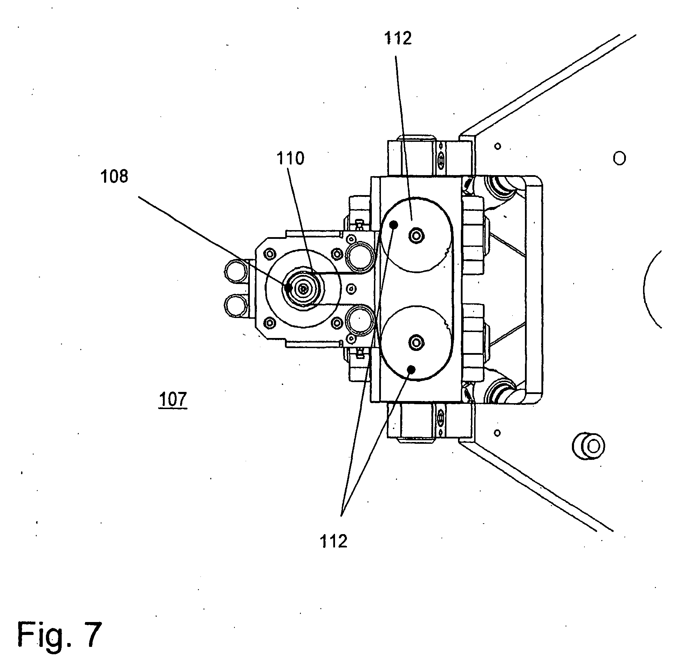

Fig. 7 zeigt eine zweite Ausgestaltungsmöglichkeit für einen Antrieb einer Längenverstellung von Strebenpaaren, wobei der wesentliche Unterschied zwischen dem Ausführungsbeispiel der voranstehenden Figur und dieser darin zu sehen ist, dass ein zweiter Elektromotor 108 einen Zahnriemen 110 antreibt, der zudem über die Antriebsräder 112 geführt ist, die im wesentlichen die Funktion der Antriebswellen 106 aus der zuvor vorgestellten Ausführungsform erfüllen. Die Spannung im Zahnriemen wird über zwei justierbare Spannrollen 107 erreicht, die auf eine zahnlose Rückseite des Zahnriemens 110 eine durch die Einstellung vorgebbare Kraft aufbringen, und den Zahnriemen 110 auf diese Weise auf eine durch die Auslegung vorgegebene Vorspannung halten. In der zweiten Ausführungsform 107 ist zudem ein Antrieb der zweiten zylindrischen Bauteile 76 erreicht, der gleichsinnig ist, so dass bei der Konstruktion der Streben vorteilhafterweise nicht auf eine im Drehsinn beim Antrieb der Bauteile zu achten ist.

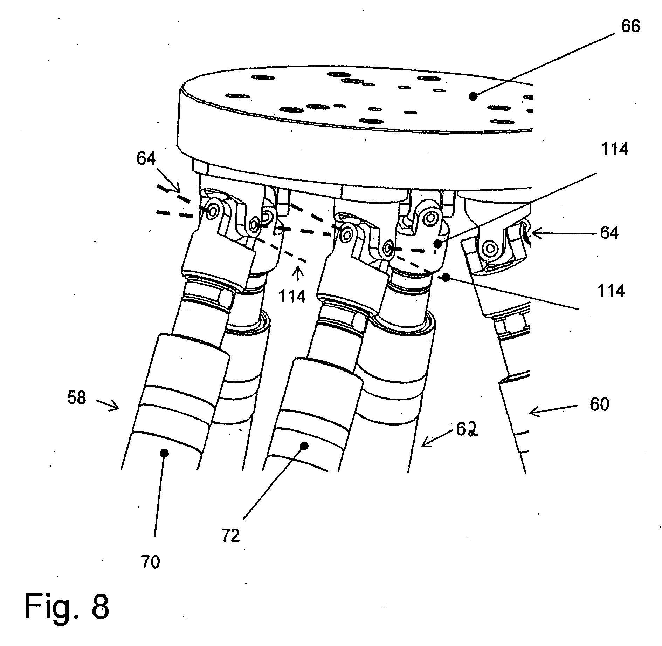

Fig. 8 zeigt das obere Ende der Strebenpaare 58, 60, 62 an ihrer Verbindungsstelle mit der Werkzeugplatte 66. Auch in dieser Figur sind bekannte Teile und Bauteile mit den entsprechenden Bezugszeichen, wie sie zuvor eingeführt wurden versehen. In der Fig. 8 sind die Gelenkachsen 114 eingezeichnet, damit die Freiheitsgrade der Gelenke möglichst sichtbar sind. In den nächst folgenden Figuren ist nämlich gezeigt, wie mögliche Positionen mit der ersten Positioniervorrichtung 52 aussehen, die mit solchen Gelenken 64 versehen sind.

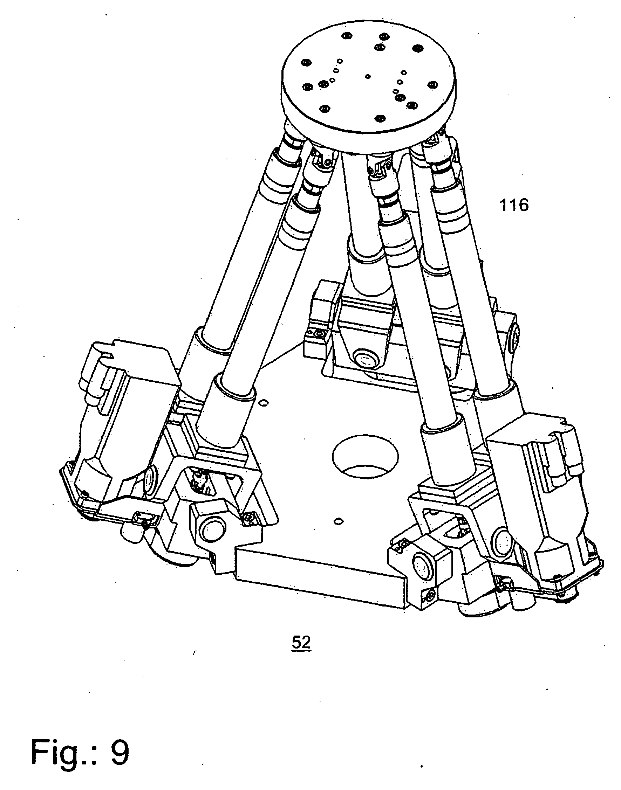

Fig. 9 zeigt eine erste Position 116 der ersten Positioniervorrichtung 52, bei der die Werkstückplatte 66 genau mittig oberhalb der Basisplatte 54 angeordnet ist und zudem die Strebenpaaren 58, 60, 62 auf ihre minimale Länge eingezogen wurden.

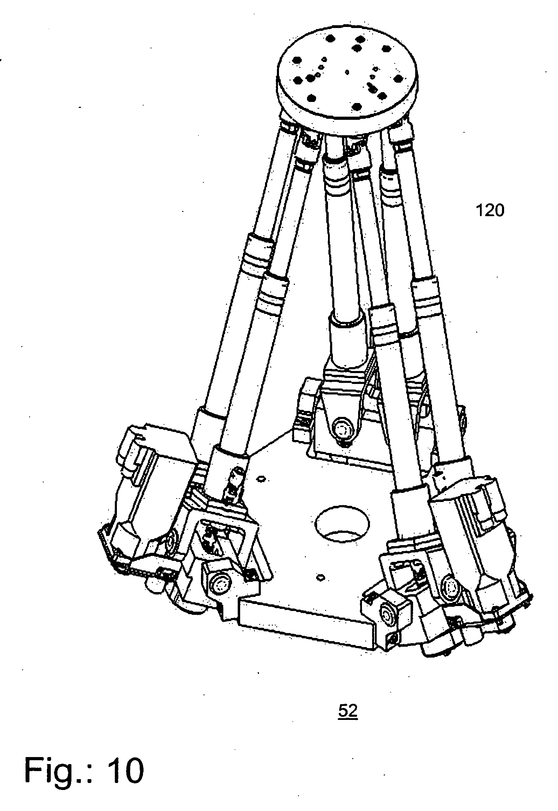

Fig. 10 zeigt eine zweite Position 118 der ersten Positioniervorrichtung 52, bei der die Werkzeugplatte 66 ebenfalls genau mittig oberhalb der Basisplatte 54 angeordnet ist, die Strebenpaare 58, 60, 62 jedoch ihre maximale Länge haben. In der Zusammenschau von Fig. 10 mit Fig. 9 ist erkennbar, wie die Werkzeugplatte 66 entlang einer ihrer Bewegungsachse positionierbar ist.

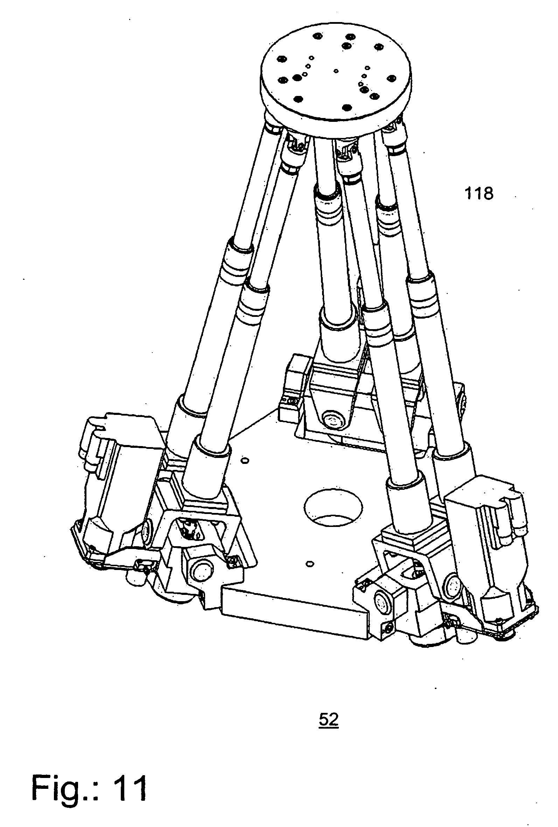

Fig. 11 zeigt eine dritte Position 120 der ersten Positioniervorrichtung 52, bei der die Strebenpaare 58, 60, 62 eine mittlere Länge im Vergleich zu der aus Fig. 9 und Fig. 10 haben.

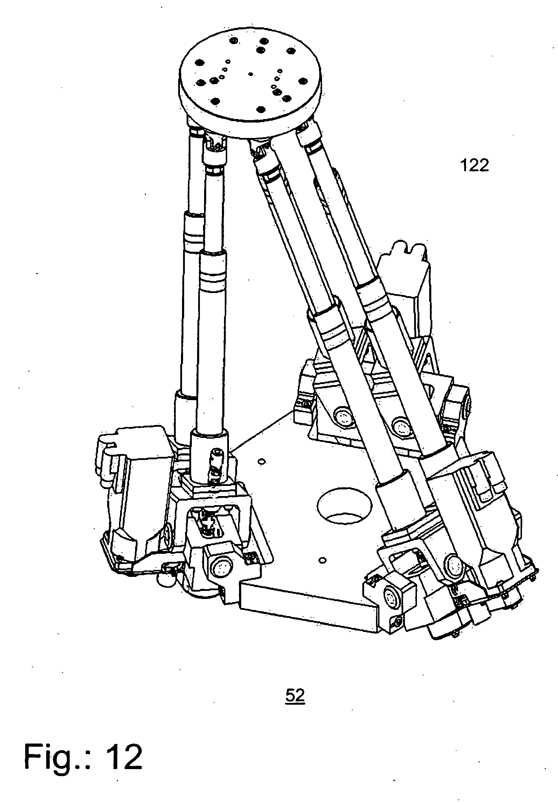

Fig. 12 zeigt eine vierte Position 122 der ersten Positioniervorrichtung 52, bei der das im Bild links zu sehende Strebenpaar eine kürzere Längserstreckung hat, als die beiden anderen Strebenpaare, so dass im Resultat die Werkzeugplatte 66 fast unmittelbar oberhalb des im Bild links zu sehenden Strebenpaares angeordnet ist. Dabei ist die Werkzeugptattenscheibe weiterhin parallel zur Basisplatte 54, wie auch in den Figuren zuvor, angeordnet. Durch die Figur wird verdeutlicht, dass je nach Kraft- und Momenteneinwirkung auf die Werkzeugplatte 66 nicht nur Druckkräfte auf die Strebenpaare 58, 60, 62 wirken können, sondern auch Zugkräfte, je nachdem wie die Kraft oder das Moment auf die Werkzeugplatte 66 wirkt.

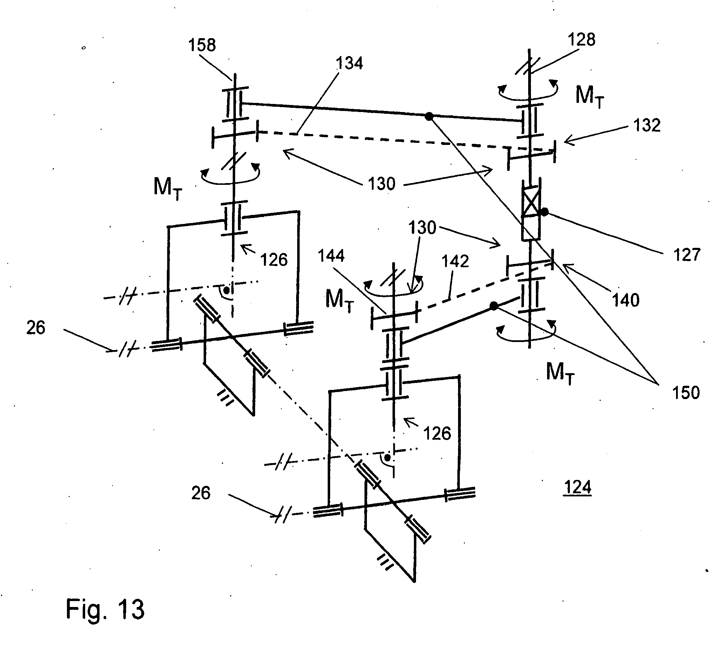

Fig. 13 betrifft eine zweite Ausführungsform 124 einer unteren Baugruppe, welche die Antriebsleistung eines Motors auf ein Strebenpaar in bestimmter Weise überträgt. Dabei zeigt diese Figur lediglich ein Schema des Zusammenwirkens verschiedener Bauelemente, wobei die Symbolik der Bauelemente wie in Fig. 1 oder 2 gewählt wurde. Daher soll im folgenden auch nur auf die wesentlichen Unterschiede im Vergleich zu den voranstehenden Antriebssystemen beschrieben werden.

Die Antriebsleistung für ein viertes Strebenpaar 126 wird durch eine Antriebswelle 128 zur Verfügung gestellt. Wie die Antriebswelle 128 selbst angetrieben wird, ist nicht näher dargestellt, dies kann jedoch pneumatische, hydraulisch, elektrisch oder auf andere dem Fachmann bekannte Weisen erfolgen. Über ein Getriebe 130 wird die Antriebsleistung der Antriebswelle 128 auf die Streben des vierten Strebepaars 126 übertragen. Im gewählten Beispiel weist das Getriebe 130 ein erstes Ritzel 132 auf, das mit einer ersten Verbindungswelle 134 verbunden ist und im Antriebsfalle diese dreht. Die Drehung bewirkt den Antrieb eines zweiten Ritzels 136, das auf einem ersten Strebenstab 138 angeordnet ist. Entsprechend treibt ein drittes Ritzel 140, das auf der Antriebswelle 128 angeordnet ist, eine zweite Antriebswelle 142 an, die wiederum ein viertes Ritzel 144 antreibt, das wiederum auf einem zweiten Strebenstab 146 angeordnet ist. Die Strebenstäbe 138, 146 sind um ihre Längsachse drehbar und entsprechend gelagert, wobei die im Strebenende hinweisende Lagerung, in vorstehend bereits beschriebener Weise mit einer kardanischen Lagerung 148 gelagert ist. Um die Lagerkräfte eines zweiten Lagers an den Strebenstäben 138, 146 aufzunehmen, sind Verbindungsstäbe 150 vorgesehen, die den Antrieb mit der besagten Lagerung verbinden. Symbolisiert ist, dies in der Figur durch die entsprechenden Verbindungsstäbe 150, welche die entsprechenden Lagersymbole an der Antriebswelle 128 mit dem Lagersymbolen an den Strebenstäben 138, 146 verbinden. Genau so gut ist es auch denkbar, dass anstatt solcher Verbindungsstäbe 150 ein Gehäuse beziehungsweise die Lagerkräfte aufnimmt. Ein verdrehsteifer Längenausgleich 127 ermöglicht schließlich das gemeinsame Verschwenken des Strebenpaares um die Drehachsen 26, ohne dass die Übertragung der Antriebsleistung beeinträchtigt.

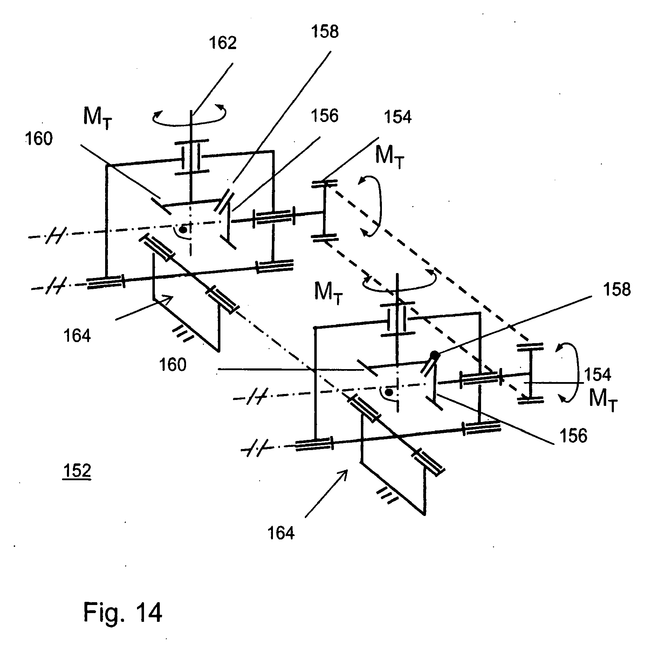

Wie Fig. 14 zeigt, verwendet eine dritte Ausführungsform 152 des erfindungsgemäßen Antriebes einen Riemenantrieb 152, der beispielsweise als Zahnriemen oder als Keilriemen oder als Zugriemen ausgeführt sein kann, um zwei Antriebsräder 154 anzutreiben. Die Antriebsräder 154 wirken auf jeweils ein erstes Kegelrad 156 eines Kegelradgetriebes 158, das ein zweites Kegelrad 160 des Kegelradgetriebes 158 antreibt, welches auf Strebenstäbe 162 wirkt. Diese Strebenstäbe 162 sind kardanisch in einer Universallagerung 164 gelagert.

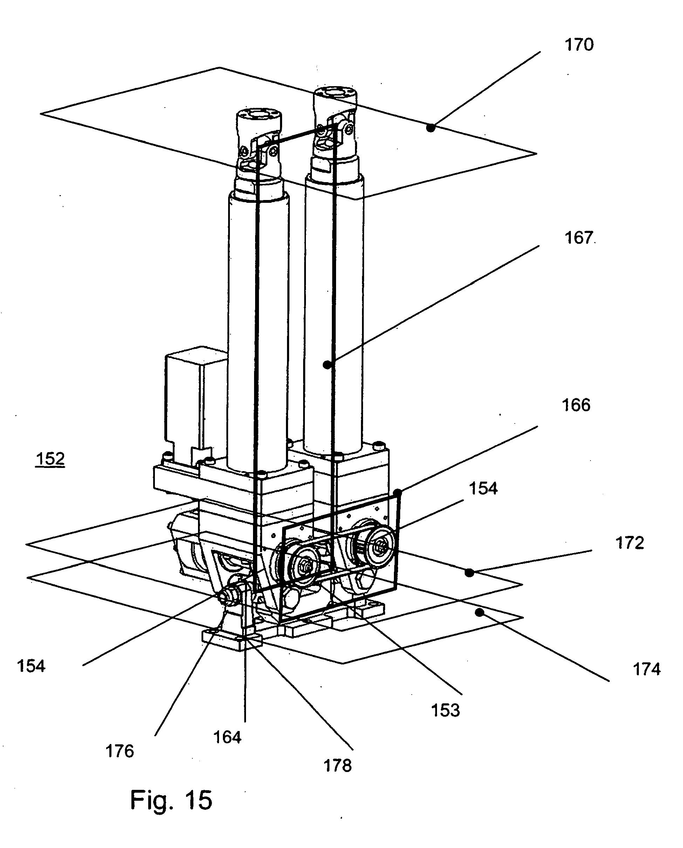

Fig. 15 zeigt eine Ausgestaltung der dritten Ausführungsform 152, die in Fig. 14 schematisch dargestellt ist und in diese Figur als Konstruktionsvorschlag im Prinzip gezeigt ist. Daher sind die entsprechenden sichtbaren Bauteile auch mit den Bezugszeichen entsprechend Figur 14 versehen.

Bei dieser Ausgestaltung hat sich nämlich als besonders günstig herausgestellt, dass verschiedene technische Funktionen jeweils in einer Ebene liegen, die durch entsprechend Vierecke in der Figur kenntlich gemacht sind. So ergibt es eine erste Ebene 166 in der der Antrieb über die Antriebsräder 154 sowie dem Antriebsriemen 153 erfolgt. Eine zweite Ebene 168 wird durch die Strebenstäbe 138, 146 sowie die entsprechenden Lagerungen an den beiden Enden der Strebenstäbe 138, 146 gebildet. Eine dritte Ebene 170 ist durch eine Werkzeugscheibe gebildet, die in dieser Figur jedoch nicht gezeigt ist, während eine vierte Ebene 172 durch die Drehachsen der Antriebsräder 154 definiert ist. Schließlich ist noch eine fünfte Ebene 174 sichtbar gemacht, die parallel zur vierten Ebene 172 liegt und durch eine Lagerstelle 176 definiert ist, nämlich einem Schwenklager, das einem Stützfuß 178 am nächsten liegt. Dabei ist der Stützfuß 178 des Verbindungselements zu einer in dieser Figur nicht dargestellten Basisstruktur mit dem diese Ausführungsform verbunden sein könnte.

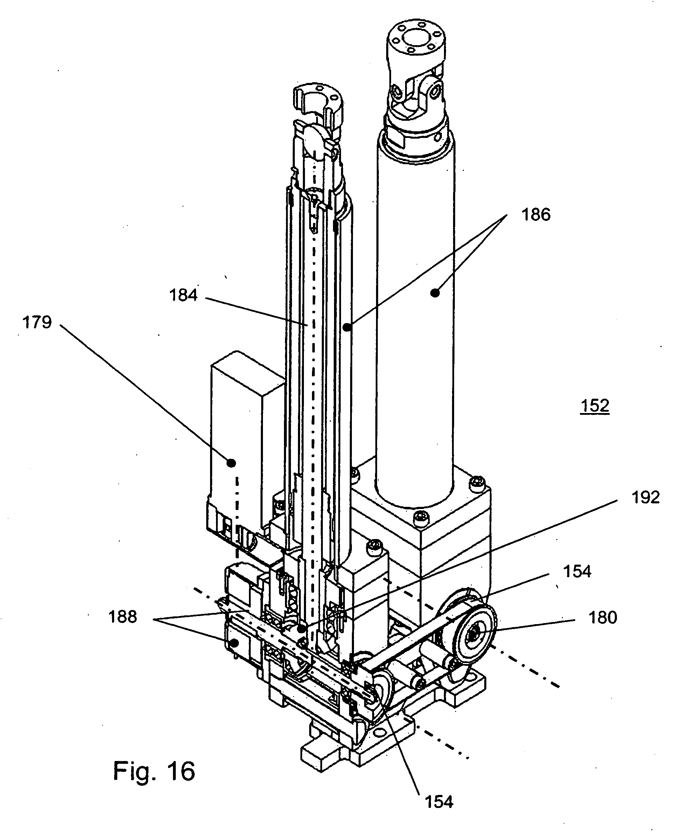

Fig. 16 zeigt eine Schnittdarstellung der dritten Ausführungsform 152, weshalb wiederum Bezugszeichen wie zuvor verwendet werden. Insbesondere soll in dieser Figur herausgestellt werden, dass ein Drehmotor 178 so angeordnet ist, dass er eine der Antriebsräder 154 mittels einer Welle 180 antreibt. Das andere Antriebsrad 154 wird wiederum über den Antriebsriemen 153 angetrieben, der eine weitere Welle 182 antreibt. Über die Welle 180 und die weitere Welle 182 werden die entsprechenden Sekundärwellen 184 der längenverstellbaren Streben 186 angetrieben. Dabei ist der Abstand zwischen den einzelnen verstellbaren Streben 186 sowohl durch den konstruktionsbedingten Abstand der Welle 180 und der weiteren Welle 182 als auch durch die Verbindungsstelle mit einer nicht dargestellten Werkzeugplatte am anderen Ende der längenverstellbaren Streben 186 im Bereich der oberen Universalgelenke 190 fixiert. Auf der weiteren Welle 182 ist auf der dem Antriebsrad 154 abgewandten Seite eine Bremse 188 angeordnet, die die weitere Welle 182 bedarfsweise blockiert. Auf diese Weise kann mit einfachen Mitteln sichergestellt werden, dass die längenverstellbaren Streben 186 in einer vorbestimmten Position fixiert werden, ohne dass der Antrieb die eventuell wirkenden Kräfte aufnehmen müsste. Das verleiht dieser Anordnung besondere mechanische Stabilität.

Weitere Maßnahmen, die in dieser Anordnung zur Stabilität beitragen, sind die Verwendung von Zahnrädern zur Kraftübertragung, so zum Beispiel auch ein Kegelrad 192, das als in einem 90°-Kegelradgetriebe die Angriffsantriebskräfte der weiteren Welle 182 auf eine der Sekundärwellen 184 überträgt.

Zudem ist in dieser Anordnung eine Funktionstrennung erreicht, in dem der Drehmotor 179 auf die Welle 180 wirkt und die erste Bremse 188 auf die weitere Welle 182. Auf diese Weise ist eine besonders kompakte Anordnung der einzelnen technischen Funktionen erreicht.

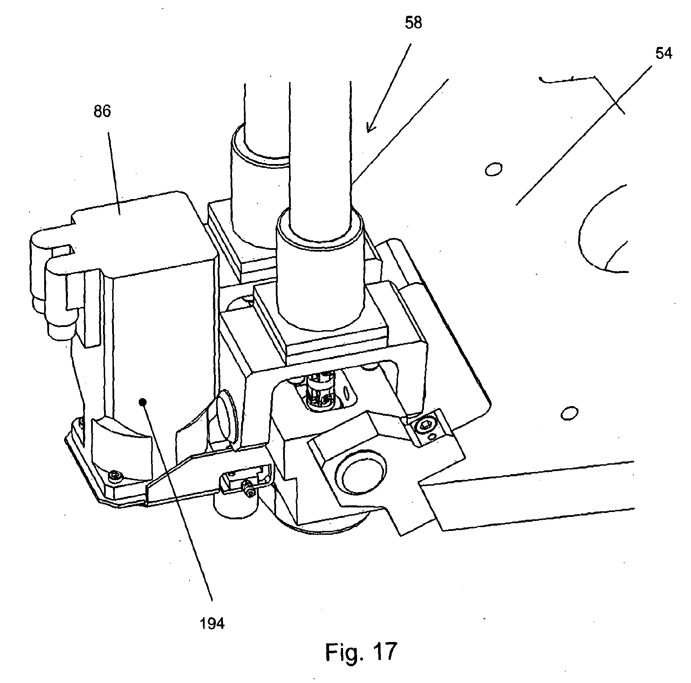

Eine weitere Bremsanordnung ist in der Fig. 17 gezeigt, welche nochmals eine Detaildarstellung des ersten Strebenpaares 58 darstellt, wobei lediglich gezeigt werden soll, dass in dieser Figur eine zweite Bremse 194 bereits im Elektromotor 86 integriert ist.

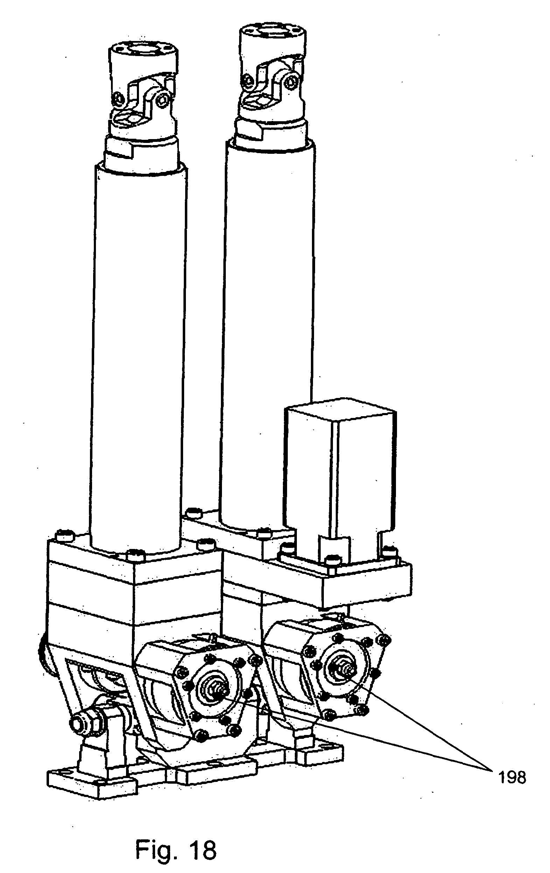

Fig. 18 zeigt eine Ausführungsvariante der Bremse 196, die zwei Teilbremsen aufweist, angeordnet auf einer Drehwelle und einer weiteren Drehwelle, die jeweils die entsprechenden Sekundärwellen der beiden Streben antreibt. In dieser Konstellation ist eine Bremsredundanz erreicht. Selbst wenn eine der Teilbremsen der dritten Bremse 196 ausfallen sollte, bremst die andere Teilbremse über die mechanische Wirkkopplung beide Sekundärwellen, als auch die dann nicht unmittelbar gebremste Sekundärwelle mit. Zudem sind die Bremsen leicht zugänglich, was die Wartung und die Kontrolle der Bremsen vereinfacht.

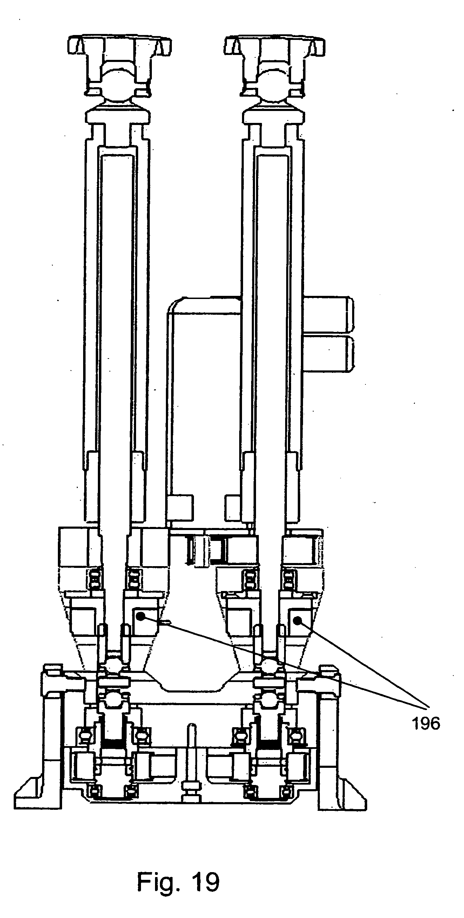

Fig. 19 zeigt eine weitere Möglichkeit und Position, um ein Bremsenpaar 198 anzuordnen. In diesem Beispiel sind wiederum zweit Teilbremsen in jeweils einer der Streben integriert, so dass die Teilbremse unmittelbar auf die Sekundärwellen wirken und derart jede einzelne Strebe durch die entsprechenden Bremskräfte fixieren können.

Hier liegt der Vorteil insbesondere darin, dass die Bauart noch kompakter wird und zudem die mechanische Redundanz der Bremse beibehalten wird.

### Bezugszeichenliste

- 10: Basis-Schema
- 12: erste Strebe
- 14: zweite Strebe
- 16: Kolben-Zylinderanordnung
- 18: erstes Kardangelenk
- 20: zweites Kardangelenk
- 22: Stützstruktur
- 24: erstes Schwenklager
- 26: zweites Schwenklager
- 28: erste Schwenkachse
- 30: drittes Schwenklager
- 32: viertes Schwenklager
- 34: zweite Schwenkachse
- 36: Achse
- 38: Werkstückträger
- 40: erstes Schema/Gelenkanordnung
- 42: obere Welle
- 43: untere Welle
- 44: erstes Drehlager
- 46: zweites Drehlager
- 48: Längenausgleichselement
- 50: drittes Kardangelenk
- 52: erste Positioniervorrichtung
- 54: Basisplatte
- 56: erstes Verbindungselement
- 58: erstes Strebenpaar
- 60: zweites Strebenpaar
- 62: drittes Strebenpaar
- 64: Universalgelenk
- 66: Werkzeugplatte
- 68: Ausnehmung
- 70: erste Strebe
- 72: zweite Strebe
- 74: erstes zylindrisches Bauelement
- 76: zweites zylindrisches Bauelement
- 78: fünftes Schwenklager
- 80: sechstes Schwenklager
- 82: Lagerachse
- 84: siebtes Schwenklager
- 86: Elektromotor
- 88: zweites Verbindungselement
- 90: Tragteil
- 92: drittes Verbindungselement
- 94: erster Schwenkbogen
- 95: mechanischer Verbinder
- 96: untere Baugruppe
- 98: viertes Kardagelenk
- 100: fünftes Kardagelenk
- 102: Stäbe
- 104: Kupplungselement
- 106: Antriebswelle
- 107: zweite Ausführungsform
- 108: zweiter Elektromotor
- 110: Zahnriemen
- 112: Antriebsräder
- 114: Gelenkachsen
- 116: erste Position
- 118: zweite Position
- 120: dritte Position
- 122: vierte Position
- 124: dritte Ausführungsform
- 126: viertes Strebenpaar
- 128: Antriebswelle
- 130: Getriebe
- 132: erstes Ritzel
- 134: erste Antriebswelle
- 136: zweites Ritzel
- 138: erster Strebenstab
- 140: drittes Ritzel
- 142: zweite Antriebswelle
- 144: viertes Ritzel
- 146: zweiter Strebenstab
- 148: kardanische Lagerung
- 150: Verbindungsstäbe
- 152: vierte Ausführungsform
- 154: Antriebsräder
- 156: erstes Kegelrad
- 158: Kegelradgetriebe
- 160: zweites Kegelrad
- 162: Strebenstäbe
- 164: Universallagerung
- 166: erste Ebene
- 168: zweite Ebene
- 170: dritte Ebene
- 172: vierte Ebene
- 174: fünfte Ebene
- 176: Lagerstelle
- 178: Stützfuß
- 179: Drehmotor
- 180: Welle
- 182: weitere Welle
- 184: Sekundärwelle
- 186: längenverstellbare Streben
- 188: erste Bremse
- 190: obere Universalgelenke
- 192: Kegelrad
- 194: zweite Bremse
- 196: dritte Bremse
- 198: vierte Bremse

## Patentansprüche

1. Positionseinrichtung mit einer Stützstruktur (22), mit einem Werkstückträger (38) und mit längenverschiebbaren Streben (70, 72; 186), die jeweils einerseits mit der Stützstruktur und andererseits mit dem Werkstückträger (22) verbunden sind, wobei die Streben (70, 72; 186) an den Verbindungsstellen mit der Stützstruktur und dem Werkstückträger (38) beweglich gelagert sind, wobei wenigstens ein Teil der Streben (70, 72; 186) längenverstellbar ist und wobei wenigstens ein Teil der Streben (70, 72; 186) einen Antrieb zur Längenverstellung aufweist, **dadurch gekennzeichnet, dass** wenigstens sechs der Streben (70, 72; 186) paarweise in einem Dreieck angeordnet sind, dass bei wenigstens zwei Strebenpaaren (58, 60, 62; 126) die Streben (70, 72; 186) parallel angeordnet sind, dass jedes Strebenpaar (58, 60, 62; 126) einen gemeinsamen Antrieb hat, durch welchen es ausschließlich längensynchron verstellbar ist, dass jedes Strebenpaar (58, 60, 62; 126) an einem ersten Ende der Längserstreckung der Streben (70, 72; 186) ein Schwenklager (24, 26, 30, 32; 78, 80; 84) aufweist, und dass jedes Strebenpaar (58, 60, 62; 126) an einem zweiten Ende der Längserstreckung jeder Strebe (70, 72) ein zweites Lager aufweist.

2. Positioniereinrichtung (52) nach Anspruch 1, **dadurch gekennzeichnet, dass** jede Strebe (70, 72) eines Strebenpaares (58, 60, 62; 126) ein Schwenklager (24, 26, 30, 32; 78, 80; 84) aufweist, und dass die Schwenklager (24, 26, 30, 32; 78, 80; 84) eine gemeinsame Lagerachsenmittellinie haben.

3. Positioniereinrichtung (52) nach Anspruch 1 oder 2, **dadurch gekennzeichnet, dass** die Strebenanzahl sechs beträgt.

4. Positioniereinrichtung (52) nach einem der vorgenannten Ansprüche, **dadurch gekennzeichnet, dass** der Antrieb ein hydraulischer, pneumatischer oder elektrischer ist.

5. Positioniereinrichtung (52) nach einem der vorgenannten Ansprüche, **dadurch gekennzeichnet, dass** der Antrieb mit einem Riemen-, einem Zahnriemen 110), einem Getriebe (130) oder Zahnrädern oder einer anderen winkeltreuen Verbindung mit dem jeweiligen Strebenpaar (58, 60,62; 126) verbunden ist.

6. Positioniereinrichtung (52) nach einem der vorgenannten Ansprüche, **dadurch gekennzeichnet, dass** jedem Strebenpaar (58, 60, 62; 126) eine Bremsvorrichtung zugeordnet ist, mit der bedarfsweise der betreffende Antrieb oder wenigstens ein durch den Antrieb angetriebenes Bauelement (74, 75, 76) bremsbar oder fixierbar ist.

7. Positioniereinrichtung (52) nach einem der vorgenannten Ansprüche, **dadurch gekennzeichnet, dass** das erste Ende der Stützstruktur zugeordnet ist.

8. Positioniereinrichtung (52) nach einem der vorgenannten Ansprüche, **dadurch gekennzeichnet, dass** am ersten Ende ein drittes Lager angeordnet ist.

9. Positioniereinrichtung (52) nach einem der vorgenannten Ansprüche, **dadurch gekennzeichnet, dass** die Summe der Freiheitsgrade des Schwenklagers (24, 26, 30, 32; 78, 80; 84) des zweiten sowie des dritten Lagers dem Freiheitsgrad der zu erwartenden Last entspricht.

10. Positioniereinrichtung (52) nach einem der vorgenannten Ansprüche, **dadurch gekennzeichnet, dass** als Lager Schwenklager (24, 26, 30, 32; 78, 80; 84) kardanische Lager, einsetzbar sind.

11. Positioniereinrichtung (52) nach einem der vorgenannten Ansprüche, **dadurch gekennzeichnet, dass** der Antrieb oder/und die Streben Positionsmessvorrichtungen aufweisen.

12. Positioniereinrichtung (52) nach einem der vorgenannten Ansprüche **dadurch gekennzeichnet, dass** mit einer Steuervorrichtung und mit Positionsangaben der Positionsmessvorrichtungen die Stellung des Werkstückträgers oder dessen Lage im Raum vorgebbar ist.

## Claims

1. A positioning device comprising a support structure (22), a workpiece carrier (38) and length-adjustable struts (70, 72; 186) which are each connected with the support structure on the one hand and the workpiece carrier (22) on the other hand, with the struts (70, 72; 186) being movably held at the connection points with the support structure and the workpiece carrier (38), with at least a part of the struts (70, 72; 186) being adjustable in length and with at least a part of the struts (70, 72; 186) having a drive for length adjustment, **characterized in that** at least six of the struts (70, 72; 186) are arranged in pairs in a triangle, the struts (70, 72; 186) are arranged in parallel in at least two pairs of struts (58, 60, 62; 126), that each pair of struts (58, 60, 62; 126) has a common drive, through which it is adjustable in an exclusive length-synchronous manner, each pair of struts (58, 60, 62; 126) comprises a swivel bearing (24, 26, 30, 32; 78, 80; 84) at a first end of the longitudinal extension of the struts (70, 72; 186), and each pair of struts (58, 60, 62; 126) comprises a second bearing at a second end of the longitudinal extension of each strut (70, 72).

2. A positioning device (52) according to claim 1, **characterized in that** each strut (70, 72) of a pair of struts (58, 60, 62; 126) comprises a swivel bearing (24, 26, 30, 32; 78, 80; 84), and the swivel bearings (24, 26, 30, 32; 78, 80; 84) have a common central line of the bearing axis.

3. A positioning device (52) according to claim 1 or 2, **characterized in that** the number of struts is six.

4. A positioning device (52) according to one of the preceding claims, **characterized in that** the drive is a hydraulic, pneumatic or electric one.

5. A positioning device (52) according to one of the preceding claims, **characterized in that** the drive is connected with a belt, a tooth belt (110), a transmission (130) or gearwheels or any other isogonal connection with the respective pair of struts (58, 60, 62; 126).

6. A positioning device (52) according to one of the preceding claims, **characterized in that** each pair of struts (58, 60, 62; 126) is associated with a braking apparatus, with which the respective drive or at least one component (74, 75, 76) driven by the drive can be braked or fixed, as required.

7. A positioning device (52) according to one of the preceding claims, **characterized in that** the first end is associated with the support structure.

8. A positioning device (52) according to one of the preceding claims, **characterized in that** a third bearing is arranged on the first end.

9. A positioning device (52) according to one of the preceding claims, **characterized in that** the sum total of the degrees of freedom of the swivel bearing (24, 26, 30, 32; 78, 80; 84) of the second and third bearing corresponds to the degree of freedom of the expected load.

10. A positioning device (52) according to one of the preceding claims, **characterized in that** gimbal bearings can be used as swivel bearings (24, 26, 30, 32; 78, 80; 84).

11. A positioning device (52) according to one of the preceding claims, **characterized in that** the driver and/or the struts comprise position measuring apparatuses.

12. A positioning device (52) according to one of the preceding claims, **characterized in that** the position of the workpiece carrier or its position in space can be predetermined with a control apparatus and position information of the position measuring apparatuses.

## Revendications

1. Dispositif de positionnement avec une structure d'appui (22), avec un porte-pièce (38) et avec des jambages (70, 72 ; 186) mobiles longitudinalement, qui sont reliés chacun d'une part avec la structure d'appui et d'autre part avec le porte-pièce (22), les jambages (70, 72 ; 186) étant supportés de manière mobile aux points d'assemblage avec la structure d'appui et le porte-pièce (38), une partie au moins des jambages (70, 72 ; 186) étant réglable en longueur et une partie au moins des jambages (70, 72 ; 186) présentant un entraînement pour le réglage en longueur, **caractérisé en ce qu'**au moins six des jambages (70, 72 ; 186) sont disposés par paires en triangle, **en ce que** dans au moins deux paires de jambages (58, 60, 62 ; 126), les jambages (70, 72 ; 186) sont disposés parallèlement, **en ce que** chaque paire de jambages (58, 60, 62 ; 126) possède un entraînement commun par lequel elle peut être réglée de manière exclusivement synchrone en longueur, **en ce que** chaque paire de jambages (58, 60, 62 ; 126) présente à une première extrémité de l'étendue en longueur des jambages (70, 72 ; 186) un palier pivotant (24, 26, 30, 32 ; 78, 80 ; 84), et **en ce que** chaque paire de jambages (58, 60, 62 ; 126) présente un deuxième palier à une deuxième extrémité de l'étendue en longueur de chaque jambage (70, 72).

2. Dispositif de positionnement (52) selon la revendication 1, **caractérisé en ce que** chaque jambage (70, 72) d'une paire de jambages (58, 60, 62 ; 126) présente un palier pivotant (24, 26, 30, 32 ; 78, 80 ; 84) et **en ce que** les paliers pivotants (24, 26, 30, 32 ; 78, 80 ; 84) ont un axe médian de palier commun.

3. Dispositif de positionnement (52) selon la revendication 1 ou 2, **caractérisé en ce que** les jambages sont au nombre de six.

4. Dispositif de positionnement (52) selon l'une des revendications précédentes, **caractérisé en ce que** l'entraînement est hydraulique, pneumatique ou électrique.

5. Dispositif de positionnement (52) selon l'une des revendications précédentes, **caractérisé en ce que** l'entraînement est relié par une courroie, une courroie dentée (110), un engrenage (130) ou des roues dentées ou une autre liaison ne modifiant pas l'angle à chaque paire de jambages (58, 60, 62 ; 126).

6. Dispositif de positionnement (52) selon l'une des revendications précédentes, **caractérisé en ce que** chaque paire de jambages (58, 60, 62 ; 126) est associée à un dispositif de freinage qui permet de freiner ou d'immobiliser si nécessaire l'entraînement concerné ou au moins un composant (74, 75, 76) entraîné par l'entraînement.

7. Dispositif de positionnement (52) selon l'une des revendications précédentes, **caractérisé en ce que** la première extrémité est associée à la structure d'appui.

8. Dispositif de positionnement (52) selon l'une des revendications précédentes, **caractérisé en ce qu'**un troisième palier est disposé à la première extrémité.

9. Dispositif de positionnement (52) selon l'une des revendications précédentes, **caractérisé en ce que** la somme des degrés de liberté du palier pivotant (24, 26, 30, 32 ; 78, 80 ; 84) du deuxième palier et du troisième est égale au degré de liberté de la charge attendue.

10. Dispositif de positionnement (52) selon l'une des revendications précédentes, **caractérisé en ce que** les paliers utilisés comme paliers pivotants (24, 26, 30, 32 ; 78, 80 ; 84) peuvent être des paliers à la cardan.

11. Dispositif de positionnement (52) selon l'une des revendications précédentes, **caractérisé en ce que** l'entraînement et/ou les jambages présentent des dispositifs de mesure de la position.

12. Dispositif de positionnement (52) selon l'une des revendications précédentes, **caractérisé en ce que** la position du porte-pièce ou sa localisation dans l'espace peut être prédéterminée avec un dispositif de commande et avec les indications de position des dispositifs de mesure de la position.
